# EUROPÄISCHE PATENTANMELDUNG

(11) **EP 3 764 181 A1**
(43) Veröffentlichungstag der Anmeldung: **13.01.2021**
(21) Anmeldenummer: 19185156.7
(22) Anmeldetag: 09.07.2019
(51) Int. Cl.: G05B 23/02, G01R 22/06, H04L 29/06

(54) **AUTOMATISCHES VERIFIZIEREN EINES GERÄTEPARAMETERS**

(71) Anmelder: Siemens Aktiengesellschaft, 80333 München (DE)
(72) Erfinder: Franze, Volker, 91207 Lauf an der Pegnitz (DE); Geipel, Markus Michael, 80799 München (DE); Rottmann, Axel, 81825 München (DE); Weinert, Kai, 90518 Altdorf (DE)

(57) **Zusammenfassung**

Die vorliegende Erfindung betrifft ein Verfahren und eine Vorrichtung zum automatischen Verifizieren eines durch ein Gerät eines industriellen Systems und/oder eine Funktionalität des Gerätes des industriellen Systems bereitgestellten Geräteparameters. Das Verfahren umfasst folgende Schritte:
Empfangen des bereitgestellten Geräteparameters;
Erfassen von wenigstens einem Verifikationsparameter von dem Gerät des industriellen Systems, wobei der erfasste Verifikationsparameter in funktioneller Beziehung zu dem empfangenen Geräteparameter des Gerätes des industriellen Systems steht;
und Verifizieren des empfangenen Geräteparameters durch ein Korrelieren des empfangenen Geräteparameter mit dem wenigstens einen erfassten Verifikationsparameter.

Durch das automatische Verifizieren des Geräteparameters wird eine Manipulation schneller erkannt und infolgedessen der Aufwand für einen Manipulationsversuch erhöht.

## Beschreibung

Die vorliegende Erfindung betrifft ein Verfahren zum automatischen Verifizieren eines durch ein Gerät eines industriellen Systems und/oder eine Funktionalität des Gerätes des industriellen Systems bereitgestellten Geräteparameters und eine Vorrichtung zum automatischen Verifizieren.

Geräte in einem industriellen System, insbesondere Speicherprogrammierbare Steuerungen können verschiedene Funktionalitäten bereitstellen, die allerdings nicht in jeder industriellen Domäne, in der das Gerät zum Einsatz kommt, notwendig sind. Diesbezüglich ist es wünschenswert, diese Geräte entsprechend der industriellen Domäne mit den benötigten Funktionalitäten zu versehen und bereitzustellen. Eine Möglichkeit stellt das Freischalten und Überwachen von Funktionen innerhalb des Gerätes dar. Beispielsweise kann ein Anwender eine generische Steuerung einsetzen, die im Laufe des industriellen Prozesses bzw. der Verwendung um weitere benötigte Funktionen ergänzt werden kann. Hierbei soll aber gerade nicht ein vollständiger Austausch der Steuerung erfolgen, sondern soll vielmehr die bestehende Steuerung über Optionspakete und/oder Runtime-Lizenzen um die benötigte Funktion erweitert werden.

Weiterhin ist es wünschenswert, dass die Verwendung eines Gerätes in einem industriellen System entsprechend einem Einsatz- und/oder Verwendungsprofil abgerechnet werden kann. Beispielsweise kann die Verwendung des Gerätes nach dem "Pay per Task" Prinzip, z.B. Bezahlung pro Schweißpunkt, Bezahlung pro Betriebsstunde, Bezahlung pro Volumen erfolgen.

Ein entsprechendes Erweitern von Funktionen in einer Steuerung und/oder das Abrechnen nach einem Einsatz- und/oder Verwendungsprofil setzt allerdings ein manipulationssicheres und vertrauenswürdiges Erfassen der Verwendung der Steuerung und/oder der Ausführung der ergänzten Funktion voraus.

Im Umfeld der Automatisierungstechnik, insbesondere um Umfeld von Speicherprogrammierbaren Steuerungen ist die Verwendung von Runtimelizenzen, bei denen Funktionen der Speicherprogrammierbaren Steuerung freigeschaltet werden können, nicht vorgesehen. Diesbezüglich kann nur auf die Ehrlichkeit des Anwenders vertraut werden, da keine technische und automatische Überwachung bzw. Kontrolle erfolgt. Zudem ist der Wechsel einer Steuerung bzw. das Ergänzen einer Funktion, beispielsweise von einer Standard Steuerung zu einer Technologie Steuerung bei im Stand der Technik bekannten Steuerungen mit einem kompletten Austausch des Gerätes verbunden. Für das Nutzen von Funktionen, beispielsweise OPC UA (Open Platform Communications Unified Architecture) müssen Lizenzen erworben werden, bei der eine Kontrolle über den Erwerb der Lizenzen bei bekannten Steuerungen nicht möglich ist.

Es ist daher Aufgabe der vorliegenden Erfindung ein Verfahren und eine Vorrichtung zum automatischen Verifizieren eines durch ein Gerät eines industriellen Systems und/oder einer Funktionalität des Gerätes des industriellen Systems bereitgestellten Geräteparameters, bereitzustellen.

Die Erfindung schafft demnach gemäß einem ersten Aspekt ein Verfahren zum automatischen Verifizieren eines durch ein Gerät eines industriellen Systems und/oder eine Funktionalität des Gerätes des industriellen Systems bereitgestellten Geräteparameters, umfassend folgende Schritte:
Empfangen des bereitgestellten Geräteparameters;
Erfassen von wenigstens einem Verifikationsparameter von dem Gerät des industriellen Systems, wobei der erfasste Verifikationsparameter in funktioneller Beziehung zu dem empfangenen Geräteparameter des Gerätes des industriellen Systems steht; und
Verifizieren des empfangenen Geräteparameters durch ein Korrelieren des empfangenen Geräteparameters mit dem wenigstens einen erfassten Verifikationsparameter.

Im Sinne der vorliegenden Erfindung ist unter einem industriellen System jedwedes technische System zur gewerblichen Gewinnung, Bearbeitung und/oder Weiterverarbeitung von Rohstoffen und/oder Zwischenprodukten zu Sachgütern zu verstehen.

Ferner ist im Sinne der vorliegenden Erfindung unter einer Funktionalität des Gerätes eine Funktion oder eine Vielzahl von Funktionen zu verstehen, die durch das Gerät ausgeführt wird bzw. durch eine Recheneinheit (z.B. CPU) des Gerätes ausgeführt und/oder gesteuert werden.

Zudem ist im Sinne der vorliegenden Erfindung unter dem Erfassen von wenigstens einem Verifikationsparameter von dem Gerät ein Aufzeichnen oder ein Empfangen des Verifikationsparameters zu verstehen, der durch die Verwendung und/oder den Betrieb des Gerätes erzeugt wird.

Ferner ist im Sinne der vorliegenden Erfindung unter einer funktionellen Beziehung zwischen dem erfassten Verifikationsparameter und dem empfangenen Geräteparameter ein direkter oder ein indirekter Zusammenhang zu verstehen, der sich aus der Funktion des Gerätes bzw. der bereitgestellten Funktion des Gerätes ergibt. Beispielsweise kann es sich bei der funktionellen Beziehung um einen Wenn-Dann-Zusammenhang handeln (logische Implikation), d.h. dass im Gutfall bei einem bestimmten Wert oder Zustand des Geräteparameters zwangsläufig ein bestimmter Wert oder Zustand des Verifikationsparameters vorliegen muss und/oder umgekehrt.

Das Korrelieren beschreibt (oder bestimmt, oder quantifiziert) eine Beziehung zwischen dem empfangenem Geräteparameter und dem erfassten Verifikationsparameter, welche ein bestimmtes Zusammenhangmaß aufweisen (beispielsweise jeweilige Zahlenwerte innerhalb die innerhalb einer gewissen Fehlertoleranz im Gutfall gleich sind oder dergleichen). Ist dieses Zusammenhangmaß nicht gegeben, kann von einer Differenz zwischen den Parametern und einer möglichen Manipulation eines der beiden Parameter ausgegangen werden. Das Korrelieren kann somit insbesondere ein Vergleichen umfassen.

Der vorliegenden Erfindung liegt die Erkenntnis zu Grunde, dass ein Bedarf für ein Erfassen von einem Geräteparameter sowie dessen Verifikation besteht. Insbesondere kann durch das automatische Verifizieren des empfangenen Geräteparameters eine Manipulation dessen nachgewiesen werden. Zudem wird der Manipulationsaufwand in vorteilhafter Weise durch die Verifikation erheblich erhöht.

Zudem wird durch die vorliegende Erfindung umfassend das zusätzliche Erfassen von wenigstens einem Verifikationsparameter und das Korrelieren des Geräteparameters mit dem Verifikationsparameter eine Plausibilitätsprüfung des Geräteparameters sowohl für den Anwender des Gerätes, als auch für einen möglichen Dritten, der das Gerät bzw. eine Funktion des Gerätes zur Verfügung stellt, ermöglicht.

Vorteilhafte Ausführungsformen und Weiterbildungen ergeben sich aus den Unteransprüchen, sowie aus der Beschreibung unter Bezugnahme auf die Figuren.

In einer vorteilhaften Ausführungsform umfasst der Schritt des Verifizierens ein Bereitstellen eines Verifikationsergebnisses. In vorteilhafter Weise kann das Verifikationsergebnis dem Anwender des Gerätes und/oder dem Vertreiber bereitgestellt werden, womit eine der Geräteparameter von beiden Seiten (Anwender oder Dritte) auf Plausibilität überprüft werden kann.

In einer vorteilhaften Ausführungsform umfasst der Geräteparameter einen Zählerstand einer Zählereinheit. Die Zählereinheit kann in einer Ausführungsform als ein Hardwarezähler in dem Gerät ausgebildet sein. Der Zählerwert kann inkrementell bis zu einem bestimmten Zählerwert erhöht werden. Somit kann beispielsweise die Anzahl der Betriebsstunden, die Anzahl des Volumens und/oder die Anzahl ausgeführter Aktionen/Funktionen mitgezählt und bestimmt werden. Der durch den Hardwarezähler bereitgestellte Zählerwert kann abgelesen und/oder bereitgestellt werden. In einer Ausführungsform kann der Zählerwert in ein digitales Signal umgesetzt und dieses bereitgestellt werden. In einer weiteren Ausführungsform kann der Zählerwert dekrementell von einem Startwert bis auf null oder auf einen vorbestimmten Zählerwert reduziert werden. Somit kann beispielsweise der Ablauf einer Volumenlizenz oder der Ablauf einer Nutzungsphase bestimmt werden.

In einer bevorzugten Ausführungsform ist die Zählereinheit als ein Programm ausgebildet, welches durch eine Recheneinheit, beispielsweise die CPU des Gerätes ausgeführt wird. In einer vorteilhaften Ausführungsform ist die Zählereinheit somit in dem Gerät des industriellen Systems ausgebildet. Vorzugsweise umfasst die Zählereinheit eine Variable deren Betrag inkrementell oder dekrementell entsprechend geändert wird.

In einer vorteilhaften Ausführungsform ist die Zählereinheit in einem weiteren Gerät des industriellen Systems ausgebildet. Unter weiteren Geräten sind Geräte zu verstehen, die verschieden von dem Gerät sind, das den Geräteparameter bereitstellt, welche auch mit dem industriellen System kommunizieren und in welchen die Funktion einer Zählereinheit implementiert werden kann. Beispielsweise können die weiteren Geräte Edge Devices umfassen. Bei einem Edge Device kann es sich um einen Edge-Router, einem Edge-Gateway oder einem Edge-Server handeln, über den ein Übergang zwischen verschieden Netzwerkanschlusspunkten realisiert wird. Edge Devices übertragen beispielsweise im Internet of Things (IoT) die Datenpakete zwischen verschiedenen Netzstrukturen und können durch ihre Prozessoren die Sensor- und Aktuatordaten der Automatisierungstechnik direkt an der Applikation am Netzrand mittels verschiedener Ansätze (z.B. Edge Computing, Edge Analytics) verarbeiten und die Datenmenge der IoT-Geräte reduzieren. Die Steuerung, Verwaltung und Verarbeitung der anfallenden Daten, insbesondere der Zählerwerte, wird wesentlich effizienter bei gleichzeitig verringertem Datenverkehr und Netzbelastung.

In einer vorteilhaften Ausführungsform ist die Zählereinheit in einer Cloud-Plattform gehostet. In vorteilhafter Weise können die zum Zählen notwendigen Signale in die Cloud bereitgestellt werden und eine in der Cloud gehostete Zählereinheit zum inkrementellen oder dekrementellen Zählen triggern. Somit kann der Zählerstand der Zählereinheit in der Cloud gehalten und entsprechend bereitgestellt werden. Das Speichern in der Cloud weist den Vorteil auf, dass praktisch unbegrenzt Speicherplatz und Ressourcen zur Berechnung der Daten zur Verfügung stehen. Zudem können die Daten manipulationssicher gespeichert und verarbeitet werden, da die Möglichkeit der verteilten Speicherung und Verarbeitung gegeben ist.

In einer weiteren vorteilhaften Ausführungsform kann eine Kombination aus Edge Device und Cloud-Plattform zum Ausbilden der Zählereinheit eingesetzt werden. In vorteilhafter Weise können die Geräteparameter und die Verifikationsparameter durch die Edge-Devices lokal verarbeitet werden, womit der Datenverkehr und Netzbelastung reduziert wird und in der Cloud gespeichert werden, bzw. die Zählereinheit zum Zählen triggern.

In einer vorteilhaften Ausführungsform umfasst der Verifikationsparameter wenigstens einen Sensorwert, der durch wenigstens eine Sensoreinheit des Gerätes des industriellen Systems und/oder des industriellen Systems erfasst wird. In vorteilhafter Weise können durch einen Sensor physikalische Eigenschaften (z.B. Wärmemenge, Temperatur, Feuchtigkeit, Druck, Schall, Helligkeit, Beschleunigung, elektrische Größen usw.) und/oder chemische Eigenschaften (z.B. Ionenstärke, elektrochemisches Potential usw.) qualitativ oder als Messgröße quantitativ bestimmt werden. Durch den Verifikationsparameter kann über die funktionelle Beziehung auf die Korrektheit des Geräteparameters geschlossen werden.

Durch die funktionelle Beziehung zwischen dem empfangenen Geräteparameter und dem erfassten Verifikationsparameter, ist es nicht mehr möglich, den Geräteparameter unbemerkt zu manipulieren, ohne auch gleichzeitig den Verifikationsparameter zu manipulieren. Eine Manipulation hätte zur Folge, dass das Zusammenhangmaß nicht mehr gegeben wäre, wodurch die Manipulation verifiziert (bzw. werden kann. Zudem kann das Manipulieren des Verifikationsparameters zu einer weiteren Störung im industriellen System und/oder in weiteren Geräten führen, da die Verifikationsparameter eventuell von dem System und/oder anderen Geräten benötigt und verwendet werden.

In einer vorteilhaften Ausführungsform umfasst der Verifikationsparameter Initialisierungsparameter des Gerätes des industriellen Systems und/oder des industriellen Systems. Im Sinne der vorliegenden Erfindung kann unter einem Initialisierungsparameter ein erwarteter Wert entsprechend dem empfangenen Geräteparameter verstanden werden. Dieser Geräteparameter kann vorgegeben werden. Ist das Zusammenhangmaß nicht gegeben, kann von einer Manipulation ausgegangen werden. Der Initialisierungsparameter kann vorgegeben werden und entsprechend auf dem verarbeitenden Gerät und/oder der Cloud manipulationssicher gespeichert sein.

In einer vorteilhaften Ausführungsform wird der Verifikationsparameter aus einer Kombination von Sensorwerten von einer Vielzahl unterschiedlicher Sensoreinheiten des Gerätes des industriellen Systems und/oder des industriellen Systems bestimmt. In vorteilhafter Weise wird durch die Kombination von Sensorwerten von einer Vielzahl unterschiedlicher Sensoreinheiten der Manipulationsaufwand vergrößert und somit die Manipulationswahrscheinlichkeit verringert. Eine hohe Anzahl zu manipulierenden Sensoren erhöht den Aufwand der Manipulation um alle Sensorwerte konsistent zuhalten, da die reellen Sensorwerte ebenso von weiteren Geräten und/oder dem industriellen System verwendet werden.

In einer vorteilhaften Ausführungsform wird der Verifikationsparameter aus einem Softsensor ermittelt. Im Sinne der vorliegenden Erfindung ist unter einem Softsensor ein Messwert zu verstehen, der aus einem anderen Messwert oder aus einer Vielzahl anderer Messwerte hergeleitet ist. Beispielsweise kann ein ersten Sensor in einem industriellen System oder in einem Gerät des industriellen System implementiert sein und ein Zusammenhang zwischen dem ersten Sensor und einem oder weiteren in dem Gerät und/oder dem industriellen System implementierten Sensoren ermittelt bzw. statistisch ermittelt und in einem Modell angelernt werden. Der erste Sensor dessen Zusammenhang ermittelt wurde kann durch eine Simulation aus den Sensorwerten der anderen Sensoren auf Basis dem angelernten Modell und den enthaltenen Zusammenhängen errechnet werden. Der Softsensor ist diesbezüglich ein simulierter Sensor, dessen Sensorwert basierend auf den Zusammenhängen von Hardwaresensoren simuliert ist. In vorteilhafter Weise können somit nach einer Anlernphase kostenintensive und aufwendige Sensoreinheiten eingespart werden. Zudem kann der Verifikationsparameter mit geringem Ressourcenaufwand bereitgestellt werden, da diese Simulation auf bestehender Hardware des Gerätes ausgeführt werden kann.

In einer vorteilhaften Ausführungsform werden der bereitgestellte Geräteparameter und der wenigstens eine erfasste Verifikationsparameter über eine gesicherte Kommunikationsverbindung von dem Gerät des industriellen Systems und/oder des industriellen Systems bereitgestellt. In vorteilhafter Weise kann somit sichergestellt werden, dass die Parameter während der Übertragung nicht manipuliert wurden. Es kann vertraut werden, dass die übertragenen Parameter den erfassten Parametern entsprechen.

In einer vorteilhaften Ausführungsform umfasst die gesicherte Kommunikationsverbindung eine verschlüsselte Verbindung über ein HTTPS Protokoll. In vorteilhafter Weise kann die Kommunikationsverbindung als eine abhörsichere Verbindung ausgebildet sein, über der die Parameter verschlüsselt werden, wodurch die Vertraulichkeit und Integrität in der Kommunikation über diese Verbindung erhöht wird. Die Vertraulichkeit und Integrität werden durch Verschlüsselung und Authentifizierung erreicht. HTTPS nutzt das Hyper Transfer Protokol, welches die zusätzliche Verschlüsselung der Daten durch SSL/TLS umfasst.

In einer vorteilhaften Ausführungsform umfasst die gesicherte Kommunikationsverbindung ein kryptographisches Verfahren, insbesondere ein asymmetrisches Kryptosystem, beispielsweise ein Public-Key-Verschlüsselungsverfahren. In vorteilhafter Weise ist zwischen den kommunizierenden Parteien kein gemeinsamer geheimer Schlüssel notwendig. Jede Partei erzeugt ein eigenes Schlüsselpaar, welches einen geheimen Teil (privater Schlüssel) und einen öffentlichen Teil (geheimer Teil) umfasst. Der öffentliche Schlüssel ermöglicht jeder Partei Daten für den Besitzer des privaten Schlüssels zu verschlüsseln, dessen digitale Signaturen zu überprüfen oder diesen zu authentisieren. Mit dem privaten Schlüssel kann der Besitzer, mit dem öffentlichen Schlüssel verschlüsselte Daten entschlüsseln, digitale Signaturen erzeugen oder sich authentisieren.

In einer vorteilhaften Ausführungsform umfasst die gesicherte Kommunikationsverbindung eine Verwendung eines Trusted Platform Moduls, TPM. Das "Trusted Platform Module" stellt einen Chip nach der TCG-Spezifikation (Trusted Computing Group) dar, welcher einen Computer oder ein ähnliches Gerät um grundlegende Sicherheitsfunktionen erweitern kann. Bei diesen Funktionen kann es sich beispielsweise um das Erreichen des Lizenzschutzes oder Datenschutzes handeln. Ein Gerät mit einem entsprechend nach TPM angepassten Betriebssystem und entsprechender Software bildet eine "Trusted Computing Platform" (TC-Platform) aus, welche nicht mehr entgegen den Interessen des Herstellers genutzt werden kann und somit als vertrauenswürdig einzustufen ist. In vorteilhafter Weise besteht somit ein Schutz gegen softwareseitige Manipulation. Zudem stellt das TPM ein Gesamtlösung dar, welche auch das Problem löst, wie kryptografische Zertifikate sicher auf einer Endanwender Hardware gespeichert werden können, ohne dass diese der Endanwender manipulieren kann.

In einer vorteilhaften Ausführungsform werden der bereitgestellte Geräteparameter und/oder der wenigstens eine erfasste Verifikationsparameter manipulationssicher gespeichert. In vorteilhafter Weise können die Geräteparameter und die Verifikationsparameter manipulationssicher gespeichert oder abgelegt werden, so dass nachweisbar keine Veränderungen an den Parametern erfolgen kann.

In einer vorteilhaften Ausführungsform erfolgt das manipulationssichere Speichern durch ein verteiltes Speichern von kryptografischen Hashwerten der bereitgestellten Geräteparameter und/oder des wenigstens einen erfassten Verifikationsparameter. In vorteilhafter Weise können die kryptografischen Hashwerte mit einer festen Länge effizient eine Zeichenfolge beliebiger Länge (Eingabedaten) über eine Hashfunktion abbilden. Diese Hashwerte können ohne einen Schlüssel oder mit einem Schlüssel erzeugt werden, wodurch der Schutz der Eingabedaten zusätzlich erhöht werden kann. Durch das verteilte Speichern der kryptografischen Hashwerte, welches öffentlich erfolgen kann, haben viele Parteien Zugriff auf die Hashwerte, was ein Manipulieren zusätzlich erschwert. Zudem ist das Verteilen der Hashwerte effizienter, als das Verteilen der gesamten Rohdaten (Eingabedaten). Durch das Verteilen der Hashwerte an einen großen Kreis, auch wenn somit die Signatur der Daten bekannt gemacht wird, wobei die Hashwerte der Signatur der Eingabedaten entsprechen, kann eine Manipulation erschwert werden, da jeder einen Unterschied zwischen der Signatur und den Eingabedaten bestimmen und somit eine Manipulation nachweisen kann.

In einer vorteilhaften Ausführungsform erfolgt das manipulationssichere Speichern in eine Blockchain. Dabei ist unter einer Blockchain (Blockkette) eine kontinuierlich erweiterbare Liste von Datensätzen zu verstehen, welche mit einem kryptografischen Verfahren miteinander verkettet sind. Jeder Datensatz beinhaltet dabei einen kryptografisch sicheren Hash (Streuwert) des vorhergehenden Datensatzes. Somit wird die Sicherheit und Nichtveränderbarkeit der Datensätze und somit der Blockchain im Ganzen gewährleistet und zugesichert. Die Hashwerte bzw. die Signaturen der Daten können in der Blockchain abgelegt werden, wodurch Speicherplatz eingespart wird.

In einer vorteilhaften Ausführungsform ist das Gerät des industriellen Systems als eine speicherprogrammierbare Steuerung oder als ein embedded Computer ausgebildet. In einer vorteilhaften Ausführungsform wird das Bestimmen des Verifikationsparameters durch die speicherprogrammierte Steuerung oder des embedded Computers ausgeführt. Unter einem embedded Computer ist ein Computer zu verstehen, in dem nur die Komponenten eingefügt sind, die für die entsprechende Anwendung benötigt werden. In vorteilhafter Weise ist die Speicherprogrammierbare Steuerung oder der embedded Computer derart eingerichtet, dass ein manipulationssicheres Speichern des Geräteparameters und der Verifikationsparameter erfolgen kann, so dass ferner ein sicheres Übertragen (manipulationssicher) der Geräteparameter und der Verifikationsparameter, beispielsweise über TPM erfolgen kann. Zudem können die gesicherten Daten durch autorisierte Anwender eingesehen werden.

Die Erfindung schafft gemäß einem weiteren Aspekt eine Vorrichtung zum automatischen Verifizieren eines durch ein Gerät eines industriellen Systems und/oder eine Funktionalität des Gerätes des industriellen Systems bereitgestellten Geräteparameters, mit
einer Empfangseinheit, welche dazu ausgebildet ist, bereitgestellte Geräteparameter zu empfangen;
einer Erfassungseinheit, welche ausgebildet ist, wenigstens einen Verifikationsparameter von dem Gerät des industriellen Systems zu erfassen, wobei der erfasst Verifikationsparameter in funktioneller Beziehung zu dem empfangenen Geräteparameter des Gerätes des industriellen Systems steht; und
einer Verifikationseinheit, welche ausgebildet ist, den empfangenen Geräteparameter durch ein Korrelieren des empfangenen Geräteparameters mit dem wenigstens einen erfassten Verifikationsparameter zu verifizieren.

In einer vorteilhaften Ausführungsform der Vorrichtung ist die Verifikationseinheit ferner ausgebildet, ein Verifikationsergebnis bereitzustellen. In vorteilhafter Weise kann das Verifikationsergebnis sowohl für den Anwender des Gerätes, als auch für einen möglichen Dritten, der das Gerät bzw. eine Funktion des Gerätes zur Verfügung stellt, bereitgestellt werden.

In einer vorteilhaften Ausführungsform der Vorrichtung umfasst diese eine Ausgabeeinheit zur Ausgabe des Verifikationsergebnisses umfasst. Das Verifikationsergebnis kann über eine visuelle Ausgabeeinheit (z.B. Bildschirm, Display, Handheld) oder über eine akustische Ausgabeeinheit als ein Fehlerton bei erkannter Manipulation ausgegeben werden. Sowohl der Anwender des Gerätes, als auch der Dritte, der das Gerät bzw. eine Funktion des Gerätes zur Verfügung stellt, kann über die Richtigkeit des Geräteparameters informiert.
Die Erfindung schafft gemäß einem weiteren Aspekt eine Speicherprogrammierbare Steuerung für das Ausführen eines Verfahrens nach einem der Verfahrensansprüche.

Die Erfindung schafft gemäß einem weiteren Aspekt ein Computerprogramm mit Programmcode für das Ausführen eines Verfahrens nach einem der Verfahrensansprüche, wenn das Computerprogramm auf einem elektronischen Gerät ausgeführt wird. Das Computerprogramm kann als Signal per Download bereitgestellt oder in einer Speichereinheit einer tragbaren Vorrichtung mit darin enthaltenem computerlesbarem Programmcode gespeichert werden, um ein Abtransportsystem zur Ausführung von Anweisungen gemäß dem oben genannten Verfahren zu veranlassen. Die Realisierung der Erfindung durch ein Computerprogrammprodukt hat den Vorteil, dass bereits vorhandene elektronische Geräte, beispielsweise Computer, embedded Computer, Speicherprogrammierbare Steuerungen, PLC, portable Geräte leicht durch Software-Updates verwendet werden können, um wie von der Erfindung vorgeschlagen, ein automatischen Verifizieren eines durch ein Gerät eines industriellen Systems und/oder einer Funktionalität des Gerätes des industriellen Systems bereitgestellten Geräteparameters, zu ermöglichen.

Das Computerprogramm kann in verteilter Weise ausgeführt werden, so dass beispielsweise vereinzelte Verfahrensschritte auf einem ersten elektronischen Gerät ausgeführt werden und die anderen Verfahrensschritte auf einem zweiten elektronischen Gerät ausgeführt werden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserung oder Ergänzungen zu der jeweiligen Grundform der vorliegenden Erfindung hinzufügen.

Merkmale, Vorteile oder alternative Ausführungsformen können den anderen beanspruchten Objekten, beispielsweise der Vorrichtung, der speicherprogrammierbaren Steuerung, dem Computerprogramm oder einem Computerprogrammprodukt zugeordnet werden und umgekehrt. Mit anderen Worten, die Ansprüche der Vorrichtung können durch Merkmale verbessert werden, die im Rahmen der Verfahren beschrieben oder beansprucht werden. In diesem Fall werden die Funktionsmerkmale des Verfahrens durch Struktureinheiten der Vorrichtung verkörpert und umgekehrt.

### Kurze Beschreibung der Figuren

In der folgenden detaillierten Figurenbeschreibung werden nicht einschränkend zu verstehende Ausführungsbeispiele mit deren Merkmalen und weiteren Vorteilen anhand der Zeichnung besprochen. Es zeigen dabei:
Fig. 1 ein Blockdiagramm zur Darstellung eines möglichen Ausführungsbeispiels einer erfindungsgemäßen Vorrichtung zum automatischen Verifizieren eines Geräteparameters; und
Fig. 2 ein Ablaufdiagramm zur Darstellung eines möglichen Ausführungsbeispiels eines erfindungsgemäßen Verfahrens zum automatischen Verifizieren eines Geräteparameters.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche, und gleich wirkende Elemente, Merkmale und Komponenten - sofern nichts anderes ausgeführt ist - jeweils mit denselben Bezugszeichen zu versehen.

### Detaillierte Beschreibung der Erfindung

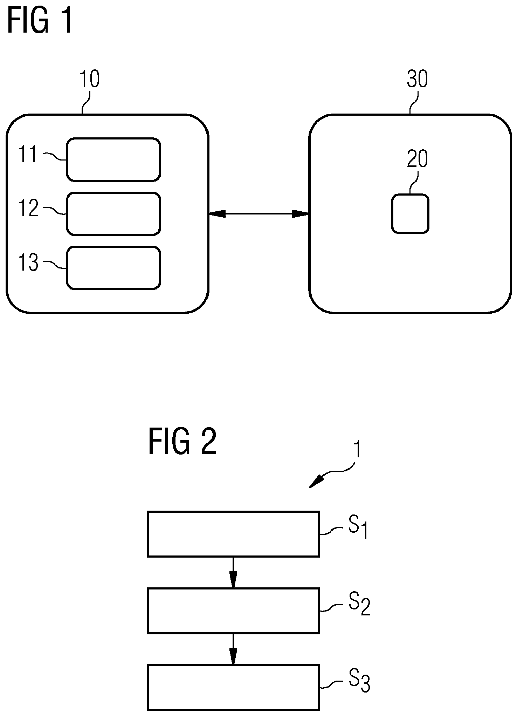

Fig. 1 zeigt ein Blockdiagramm zur Darstellung eines möglichen Ausführungsbeispiels einer erfindungsgemäßen Vorrichtung 10 zum automatischen Verifizieren eines Geräteparameters. In Fig. 1 bezeichnet Bezugszeichen 10 die Vorrichtung gemäß der vorliegenden Erfindung. Die Vorrichtung 10 umfasst ein Empfangseinheit 11, welche ausgebildet ist einen bereitgestellten Geräteparameter, beispielsweise von einem Gerät 20 eines industriellen Systems 30 zu empfangen. Der Geräteparameter kann über eine gesicherte Kommunikationsverbindung 5 bereitgestellt werden. Die gesicherte Kommunikationsverbindung 5 kann eine verschlüsselte Verbindung über ein HTTPS Protokoll, ein kryptographisches Verfahren, insbesondere ein asymmetrisches Kryptosystem und/oder eine Verwendung eines Trusted Platform Modules umfassen. Der Geräteparameter kann in einer Ausführungsform als ein Zählerstand einer Zählereinheit 40 ausgebildet sein. Die Zählereinheit 40 kann in einer Ausführungsform in dem Gerät 20 des industriellen Systems 30 ausgebildet sein. In einer weiteren Ausführungsform kann die Zählereinheit 40 in einem weiteren Gerät 50 des industriellen Systems 30, beispielsweise einem Edge Device ausgebildet sein. In einer weiteren Ausführungsform kann die Zählereinheit in einer Cloud-Plattform gehostet sein.

Der bereitgestellte Geräteparameter und der erfasste Verifikationsparameter können manipulationssicher persistiert werden. Beispielsweise können die Parameter in einem nichtflüchtigen Speicher manipulationssicher abgespeichert werden. In einer Ausführungsform kann das manipulationssichere Speichern durch ein verteiltes Speichern von kryptografischen Hashwerten der bereitgestellten Geräteparameter und/oder des wenigstens einen erfassten Verifikationsparameters erfolgen. In einer weiteren Ausführungsform erfolgt das manipulationssichere Speichern in einer Blockchain, beispielsweise Etherium.

Ferner umfasst die Vorrichtung 10 eine Erfassungseinheit 12. Die Erfassungseinheit 12 ist ausgebildet wenigstens einen Verifikationsparameter von dem Gerät 20 des industriellen Systems 30 zu erfassen. Der erfasste Verifikationsparameter steht in funktioneller Beziehung zu dem empfangenen Geräteparameter des Gerätes 20 des industriellen Systems 30. Der Verifikationsparameter umfasst in einer Ausführungsform wenigstens einen Sensorwert, welcher durch wenigstens eine Sensoreinheit 70 des Gerätes 20 des industriellen Systems 30 und/oder des industriellen Systems 30 erfasst wird. Die Sensoreinheit ist ausgebildet, eine Vielzahl an verschiedenen Messungen auszuführen und die erfassten Messdaten bereitzustellen. In einer weiteren Ausführungsform umfasst der Verifikationsparameter einen Initialisierungsparameter des Gerätes 20 des industriellen Systems 30. In einer weiteren Ausführungsform umfasst der Verifikationsparameter eine Kombination von Sensorwerten des Gerätes 20 des industriellen Systems 30. Insbesondere kann hierbei kann hierbei das Vorhandensein aller festgelegten Sensorwerte notwendig sein, um einen Geräteparameter als zulässig zu verifizieren. In einer weiteren Ausführungsform umfasst die Sensoreinheit einen virtuellen Sensor, welcher einen Zusammenhang von Sensorwerten verschiedener Sensoreinheiten eines Gerätes 20 darstellt. Der Zusammenhang der Sensorwerte kann in einem Modell angelernt sein. Der Verifikationsparameter wird über eine gesicherte Kommunikationsverbindung bereitgestellt.

Zudem umfasst die Vorrichtung 10 eine Verifikationseinheit 13, welche ausgebildet ist, den empfangenen Geräteparameter durch ein Korrelieren des empfangenen Geräteparameters mit dem wenigstens einen erfassten Verifikationsparameter zu verifizieren. Das Verifikationsergebnis der Verifikation kann über eine Ausgabeeinheit 14 sowohl für den Anwender des Gerätes 20, als auch für einen möglichen Dritten, der das Gerät 20 bzw. eine Funktion des Gerätes 20 zur Verfügung stellt, bereitgestellt werden.

Die Vorrichtung 10 weist den Vorteil auf, dass eine Nichtmanipulierbarkeit der Zählerstände der Zählereinheit 40, der Sensoreinheit 70 oder der Sensoreinheiten 70 erreicht wird. Zudem können die Zählerstände der Zählereinheit 40 und die Messdaten der Sensoreinheit 70 über die gesicherte Kommunikationsverbindung 5 übertragen und bereitgestellt werden. Die übertragenen Messdaten und Zählerstände können manipulationssicher gespeichert werden. Zudem kann der Zählerstand der Zählereinheit 40 durch einen Anwender und eines möglichen Dritten auf Basis eines automatisch bereitgestellten Verifikationsergebnisses überprüft und somit eine Manipulation des Zählerstandes detektiert bzw. ausgeschlossen werden.

In einer beispielhaften Ausführungsform, kann durch eine Zählereinheit 40 das Setzen von Lötstellen durch eine Maschine (Gerät 20) erfasst bzw. gezählt werden. Der Zählerwert kann beispielsweise zum Abrechnen pro Lötstelle verwendet werden. Um eine Manipulation des Zählerwertes zu unterbinden bzw. auszuschließen, wird dieser manipulationssicher an eine Vorrichtung 10 gemäß der vorliegenden Erfindung übertragen und zudem manipulationssicher gespeichert.

Der übertragene Zählerwert kann durch Korrelation des Zählerwertes mit einem Verifikationsparameter verifiziert werden. Beispielsweise können während des Setzens der Lötstellen durch die Maschine (Gerät 20) weitere Verifikationsparameter erfasst werden. Diese können beispielsweise Messdaten über die Spannungsaufnahme während des Lötens, die Löttemperatur, eine erhöhte Innentemperatur während des Betriebes der Maschine usw. umfassen. Diese erfassten Messdaten stehen in einer funktionellen Beziehung zu den gezählten Lötstellen.

Durch den erfassten Verifikationsparameter kann implizit auf die Anzahl der gesetzten Lötstellen und somit auf den Zählerwert rückgeschlossen werden, womit wenn vorgenommen, eine Manipulation des Zählerwertes detektiert werden kann. Ein Verschleiern der Manipulation ist nur durch zusätzliche Manipulation der Sensoreinheiten bzw. der Messdaten möglich, welche allerdings ebenfalls durch das manipulationssichere Übertragen und Speichern geschützt sind.

Zudem kann eine Manipulation der Messdaten einen Effekt auf Funktionen und/oder Geräte haben, die diese Messdaten ebenfalls verwenden. Neben der Korrelation können auch statistische Eigenschaften der Messdaten einer Plausibilitätsprüfung unterzogen werden. Beispielsweise kann das Frequenzspektrum des Signals, die Varianz des Messrauschens usw. erfasst und ausgewertet werden.

In einer weiteren beispielhaften Ausführungsform kann ein Zählen von freigeschalteten und/oder aktivierten Funktionen des Gerätes 20 zur Verifikation erfolgen. Somit kann überwacht werden, ob nur die Funktionen verwendet werden, für die Lizenzen erworben wurden. Dies erfolgt auch durch ein Korrelieren des Zählerstandes (aktivierte Funktionen) mit Verifikationsparameter, welche Messdaten als Ergebnis der ausgeführten Funktionen umfassen.

Eine Speicherprogrammierbare Steuerung (SPS oder PLC) die entsprechend eingerichtet ist, beispielsweise zum manipulationssicheren Speichern entsprechender Zählerdaten und Sensordaten inklusive der Daten einer Plausibilitätssensorik (inkl. z.B. der Möglichkeit, dass ein Erstausrüster (OEM) bestimmte sichere Speicherbereiche in einer SPS/PLC für eigene Pay-per-Task-Anwendungen einrichten kann), zum sicheren Übertragen und zum entsprechenden Einsehen der Daten durch freigeschaltete Anwender kann einen technischen Vorteil bieten, das einem Anwender solcher PLCs das Einrichten von Pay-per-Task erleichtert.
Fig. 2 zeigt ein Ablaufdiagramm zur Darstellung eines möglichen Ausführungsbeispiels eines erfindungsgemäßen Verfahrens zum automatischen Verifizieren eines Geräteparameters. Das Verfahren 1 umfasst bei dem dargestellten Ausführungsbeispiel mehrere Schritte. In einem ersten Schritt S1 werden die bereitgestellten Geräteparameter empfangen. Die Geräteparameter werden durch mindestens ein Gerät 20 (z.B. mehrere Geräte 20) eines industriellen Systems 30 (vgl. Fig. 1) bereitgestellt.

In einer Ausführungsform kann der bereitgestellte Geräteparameter von einem möglichen Dritten, der das Gerät 20 bzw. eine Funktion des Gerätes 20 zur Verfügung stellt, empfangen werden und beispielsweise für die Abrechnung von Leistungen und/oder die Verwendung des Gerätes 20 bzw. der zur Verfügung gestellten Funktion des Gerätes 20 verwendet werden. Der Geräteparameter des Gerätes 20 kann in einer Ausführungsform über eine gesicherte Kommunikationsverbindung 5 von dem Gerät 20 des industriellen Systems 30 bereitgestellt werden.

Das gesicherte Bereitstellen kann etwa über eine mit HTTPS verschlüsselte Verbindung erfolgen. In einer weiteren Ausführungsform kann ein kryptographisches Verfahren, insbesondere ein asymmetrisches Verfahren und/oder ein "Trusted Platform Module" verwendet werden. Dies hat den Vorteil, dass eine Manipulation des bereitgestellten Geräteparameters während der Übertragung erschwert wird.

In einer Ausführungsform umfasst der Geräteparameter einen Zählerwert einer Zählereinheit 40. In einer bevorzugten Ausführungsform ist die Zählereinheit 40 als ein digitaler Zähler in dem Gerät 20 des industriellen Systems 30 ausgebildet und wird über die gesicherte Kommunikationsverbindung 5 bereitgestellt und gespeichert. In einer weiteren bevorzugten Ausführungsform ist die Zählereinheit 40 in einem weiteren Gerät 50, beispielsweise in einem Edge Device ausgebildet oder in einer Cloud-Plattform gehostet.

In einem weiteren Schritt S2 wird wenigstens ein Verifikationsparameter von dem Gerät 20 des industriellen Systems 30 erfasst, wobei der erfasste Verifikationsparameter in funktioneller Beziehung zu dem empfangenen Geräteparameter des Gerätes 20 des industriellen Systems 30 steht.

Der Verifikationsparameter kann in einer vorteilhaften Ausführungsform einen Sensorwert umfassen, der durch wenigstens eine Sensoreinheit 70 des Gerätes 20 des industriellen Systems 30 und/oder des industriellen Systems 30 erfasst wird. Der erfasste Sensorwert steht in funktioneller Beziehung zu dem empfangenen Geräteparameter. In einer Ausführungsform kann der Verifikationsparameter aus einer Kombination von Sensorwerten von einer Vielzahl unterschiedlicher Sensoreinheiten 70 des Gerätes 20 des industriellen Systems 30 und/oder des industriellen Systems 30 bestimmt werden.

In einer weiteren Ausführungsform kann der Verifikationsparameter aus einem Sensorwert eines simulierten Sensors bestimmt werden. Der simulierte Sensorwert kann sich aus einem Zusammenhang von Sensorwerten verschiedener Sensoren ergeben. Der Zusammenhang kann in einem Modell angelernt werden.

In einem weiteren Schritt S3 wird der empfangene Geräteparameter durch ein Korrelieren des empfangenen Geräteparameters mit dem wenigstens einen erfassten Verifikationsparameter verifiziert. Das Verifizieren kann automatisch erfolgen. Durch das Verifizieren wird beispielsweise überprüft, ob zwischen dem Geräteparameter und dem Verifikationsparameter eine Wechselbeziehung besteht, oder ob ein bekannter funktioneller Zusammenhang, oder eine bekannte funktionelle Beziehung, durch den empfangenen Geräteparameter und den erfassten Verifikationsparameter erwartungsgemäß eingehalten wird (Gutfall) oder nicht. Somit kann die Plausibilität des Geräteparameters durch beide Seiten geprüft und eine eventuelle Manipulation detektiert werden.

In einem weiteren möglichen Schritt kann das Verifikationsergebnis bereitgestellt werden.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### Zusammenfassung der Erfindung

Die vorliegende Erfindung betrifft ein Verfahren und eine Vorrichtung zum automatischen Verifizieren eines durch ein Gerät eines industriellen Systems und/oder einer Funktionalität des Gerätes des industriellen Systems bereitgestellten Geräteparameters. Das Verfahren umfasst folgende Schritte: Empfangen des bereitgestellten Geräteparameters;
Erfassen von wenigstens einem Verifikationsparameter von dem Gerät des industriellen Systems, wobei der erfasste Verifikationsparameter in funktioneller Beziehung zu dem empfangenen Geräteparameter des Gerätes des industriellen Systems steht; und Verifizieren des empfangenen Geräteparameters durch ein Korrelieren des empfangenen Geräteparameter mit dem wenigstens einen erfassten Verifikationsparameter.

Durch das automatische Verifizieren des Geräteparameters wird eine Manipulation schneller erkannt und infolgedessen der Aufwand für einen Manipulationsversuch erhöht.

### Bezugszeichenliste

- 1: Verfahren
- 5: Kommunikationsverbindung
- 10: Vorrichtung
- 20: Gerät eines industriellen Systems
- 30: industrielles System
- 40: Zählereinheit
- 50: weiteres Gerät eines industriellen Systems
- 60: Cloud-Plattform
- 70: Sensoreinheit
- S1-S3: Verfahrensschritte

## Patentansprüche

1. Verfahren (1) zum automatischen Verifizieren eines durch ein Gerät (20) eines industriellen Systems (30) und/oder eine Funktionalität des Gerätes des industriellen Systems (30) bereitgestellten Geräteparameters, umfassend folgende Schritte:
- Empfangen (S1) des bereitgestellten Geräteparameters;
- Erfassen (S2) von wenigstens einem Verifikationsparameter von dem Gerät (20) des industriellen Systems (30), wobei der erfasste Verifikationsparameter in funktioneller Beziehung zu dem empfangenen Geräteparameter des Gerätes (20) des industriellen Systems (30) steht; und
- Verifizieren (S3) des empfangenen Geräteparameters durch ein Korrelieren des empfangenen Geräteparameters mit dem wenigstens einen erfassten Verifikationsparameter.

2. Verfahren nach dem unmittelbar vorherigen Anspruch, wobei der Schritt des Verifizierens ein Bereitstellen eines Verifikationsergebnisses umfasst.

3. Verfahren nach einem der vorherigen Ansprüche 1 oder 2, wobei der Geräteparameter einen Zählerstand einer Zählereinheit (40) umfasst.

4. Verfahren nach Anspruch 3, wobei die Zählereinheit (40) in dem Gerät (20) des industriellen Systems (30) ausgebildet ist.

5. Verfahren nach Anspruch 3, wobei die Zählereinheit (40) in einer Cloud-Plattform (60) gehostet ist.

6. Verfahren nach einem der vorherigen Ansprüche 1 bis 5, wobei der Verifikationsparameter wenigstens einen Sensorwert umfasst, der durch wenigstens eine Sensoreinheit (70) des Gerätes (20) des industriellen Systems (30) und/oder des industriellen Systems (30) erfasst wird.

7. Verfahren nach einem der vorherigen Ansprüche 1 bis 6, wobei der Verifikationsparameter Initialisierungsparameter des Gerätes (20) des industriellen Systems (30) und/oder des industriellen Systems (30) umfasst.

8. Verfahren nach einem der vorherigen Ansprüche 1 bis 7, wobei der Verifikationsparameter aus einer Kombination von Sensorwerten von einer Vielzahl unterschiedlicher Sensoreinheiten (70) des Gerätes (20) des industriellen Systems (30) und/oder des industriellen Systems (30) bestimmt wird.

9. Verfahren nach einem der vorherigen Ansprüche 1 bis 8, wobei der bereitgestellte Geräteparameter und der wenigstens eine erfasste Verifikationsparameter über eine gesicherte Kommunikationsverbindung (80) von dem Gerät (20) des industriellen Systems (30) und/oder des industriellen Systems (30) bereitgestellt werden.

10. Verfahren nach Anspruch 9, wobei die gesicherte Kommunikationsverbindung (80) wenigstens umfasst:
- eine verschlüsselte Verbindung über ein HTTPS Protokoll;
- ein kryptographisches Verfahren, insbesondere ein asymmetrisches Kryptosystem; und/oder
- eine Verwendung eines Trusted Platform Moduls, TPM.

11. Verfahren nach einem der vorherigen Ansprüche 1 bis 10, wobei der bereitgestellte Geräteparameter und/oder der wenigstens eine erfasste Verifikationsparameter manipulationssicher gespeichert werden.

12. Verfahren nach Anspruch 11, wobei das manipulationssichere Speichern durch ein verteiltes Speichern von kryptografisch Hashwerten der bereitgestellten Geräteparameter und/oder des wenigstens einen erfassten Verifikationsparameter erfolgt.

13. Verfahren nach Anspruch 11, wobei das manipulationssichere Speichern in eine Blockchain erfolgt.

14. Vorrichtung (10) zum automatischen Verifizieren eines durch ein Gerät (20) eines industriellen Systems (30) und/oder eine Funktionalität des Gerätes (20) des industriellen Systems (30) bereitgestellten Geräteparameters, mit
einer Empfangseinheit (11), welche dazu ausgebildet ist, bereitgestellte Geräteparameter zu empfangen;
einer Erfassungseinheit (12), welche ausgebildet ist, wenigstens einen Verifikationsparameter von dem Gerät (20) des industriellen Systems (30) zu erfassen, wobei der erfasst Verifikationsparameter in funktioneller Beziehung zu dem empfangenen Geräteparameter des Gerätes (20) des industriellen Systems (30) steht; und
einer Verifikationseinheit (13), welche ausgebildet ist, den empfangenen Geräteparameter durch ein Korrelieren des empfangenen Geräteparameters mit dem wenigstens einen erfassten Verifikationsparameter zu verifizieren.

15. Computerprogrammprodukt mit Programmcode für das Ausführen eines Verfahrens nach einem der vorherigen Verfahrensansprüche, wenn das Computerprogramm auf einem elektronischen Gerät ausgeführt wird.
